## Europäisches Patentamt

## European Patent Office

## Office européen des brevets

(11) Veröffentlichungsnummer: **0 119 320**
**B1**

(12) # EUROPÄISCHE PATENTSCHRIFT

(45) Veröffentlichungstag der Patentschrift:
18.03.87

(51) Int. Cl.⁴: **G 11 B 23/02**

(21) Anmeldenummer: **83112976.2**

(22) Anmeldetag: **22.12.83**

(54) Behälter zur Aufnahme von Datenträgern.

(30) Priorität: **15.01.83 DE 3301203**
**29.06.83 EP 83106481**

(43) Veröffentlichungstag der Anmeldung:
**26.09.84 Patentblatt 84/39**

(45) Bekanntmachung des Hinweises auf die Patenterteilung:
**18.03.87 Patentblatt 87/12**

(84) Benannte Vertragsstaaten:
**DE FR GB IT**

(56) Entgegenhaltungen:
**EP-A-0 066 275**
**EP-A-0 067 765**
**DE-U-7 917 351**
**US-A-4 162 112**

(73) Patentinhaber: **idn inventions and development of novelties ag, Hartbertstrasse 9, CH- 7002 Chur (CH)**

(72) Erfinder: **Ackeret, Peter, Allmendstrasse 18, CH- 8700 Küsnacht (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

## Beschreibung

Die Erfindung betrifft einen Behälter zur Aufnahme von Datenträgern mit den im Oberbegriff des Patentanspruchs 1 genannten Merkmalen. Aus der DE-PS 22 48 408 ist ein für Kompaktkassetten bestimmter und benutzter Behälter bekannt. Er weist an der Frontseite des Schiebers eine Platte auf, die bei eingeschobenem Schieber das Gehäuse verschließt und zugleich als Etikettenträger dienen kann. Für Kompaktkassetten, die man üblicherweise an ihren Kanten erfaßt, weist der Schieber bei dem bekannten Behälter Freiräume auf, so daß die Kassette leicht über die erwähnte Frontplatte des Schiebers gehoben werden kann, wenn dieser von der Federanordnung ausgeschoben worden ist.

Andere Typen von Datenträgern, etwa Videokassetten oder Kompaktschallplatten, lassen sich wegen ihrer mehr als spannenlangen Flächenabmessungen am besten dann erfassen, wenn man ihre Kante umgreift, mit den Fingern auf die großen Flächen drückend. Es ist dann wünschenswert, den Datenträger in Fluchtlinie mit der Ausschubbewegung des Schiebers vollends herausziehen zu können, wobei eine Schieberfrontwandung störend sein könnte.

Ferner ist aus der DE-U-79 17 351 ein weiterer Behälter für Magnetbandkassetten bekannt, der die im Oberbegriff des Patentanspruchs 1 genannten Merkmale aufweist. Bei dem bekannten Behälter weist der Transportschieber die Form einer Platte auf, die eine eingelegte Kassette in Richtung einer ihm gegenüberliegenden Gehäuseöffnung drückt. Wird manuell ein an das Gehäuse angeformter Riegel gehoben, welcher ein an das Gehäuse angelenktes Türelement sichert, so verlagert der Transportschieber die Kassette um eine hinreichende Strecke, daß die Kassette erfaßt und vollends herausgezogen werden kann. Während also die Entnahme einer Kassette ziemlich problemlos ist, gilt dies keinesfalls für das Einsetzen derselben in den Behälter. Denn der Benutzer muß den Transportschieber gegen seine Federvorspannung mit der Kassette soweit zurückdrücken, daß das Türelement - das um eine Achse parallel zur kurzen Kante der Gehäuseöffnung schwenkbar ist - wenigstens soweit hochgeklappt werden kann, daß es selbst die Kassette sichert. Diese Art der Handhabung ist nicht nur unbequem, weil mit nur einer Hand kaum durchführbar, sondern bringt auch das Risiko mit sich, daß der Benutzer seine Finger einklemmt.

Ausgehend von der Merkmalskombination im Oberbegriff des Patentanspruchs 1 liegt der Erfindung die Aufgabe zugrunde, einen Behälter für Einhandbedienung zu schaffen, bei dem die Handhabung besonders bequem ist, was beides Voraussetzung dafür ist, daß ein solcher Behälter in Kraftfahrzeuge für die Bedienung durch den Fahrer einbaubar ist.

Die gemäß der Erfindung vorgesehene Lösung wird durch die Kombination mit den im kennzeichnenden Teil des Patentanspruchs 1 genannten Merkmalen verkörpert. Diese Konzeption erlaubt nicht nur die bequeme Entnahme, sondern vor allem auch ein problemloses Wiedereinordnen in den Behälter, da die Verlagerung der Türelemente automatisch bei Einschub des Transportschiebers erfolgt.

Die Unteransprüche definieren Ausgestaltungen der Erfindung.

Bevorzugte Ausführungsbeispiele des Gegenstandes der Erfindung sind in den beigefügten Zeichnungen dargestellt und werden nachstehend im einzelnen erläutert.

Die Figuren 1 bis 3 zeigen ein erstes Ausführungsbeispiel:

· Fig. 1 stellt einen weitgehend schematisierten Längsschnitt durch einen erfindungsgemäßen Behälter dar, und zwar mit eingeschobenem Schieber,

Fig. 2 zeigt in Frontansicht, teilweise weggebrochen, einen Teil eines solchen Behälters, und

Fig. 3 ist ein weitgehend schematisierter Querschnitt durch einen Teil eines solchen Behälters zur Darstellung verschiedener Phasen des Öffnungs- bzw. Schließvorgangs.

Die Fig. 4 bis 8 zeigen ein zweites Ausführungsbeispiel.:

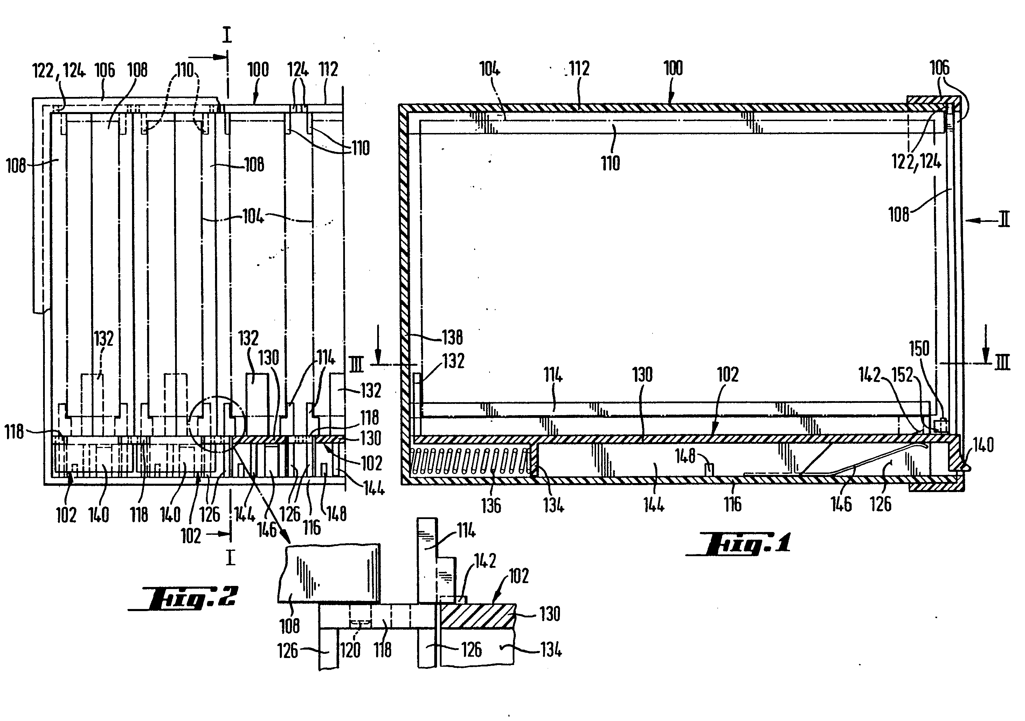

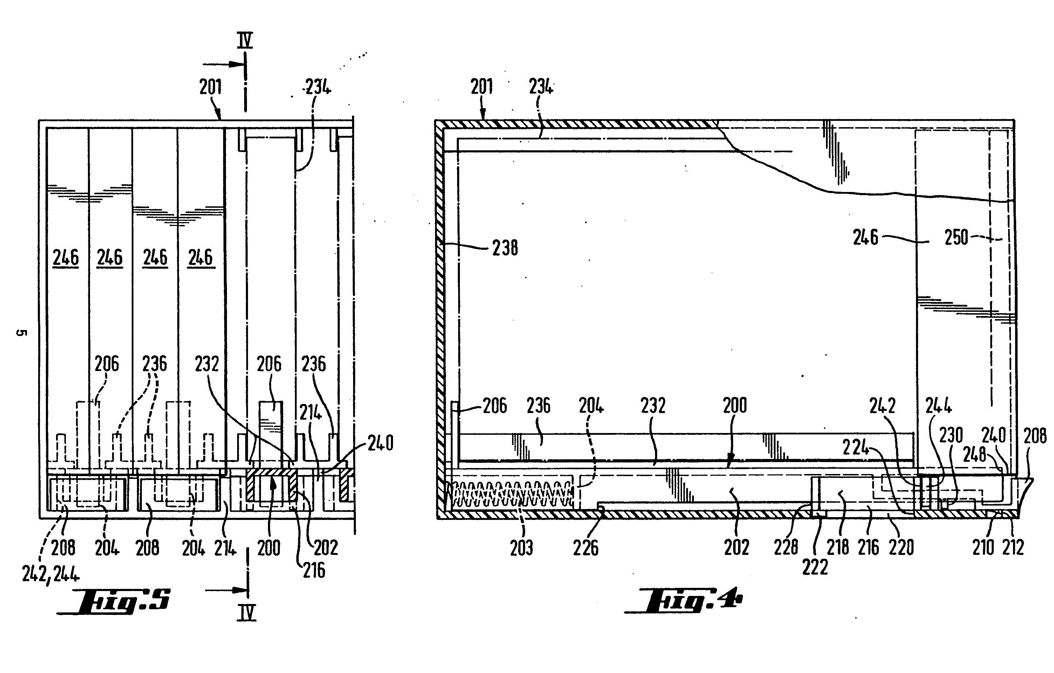

Fig. 4 ist eine Teilschnittdarstellung ähnlich Fig. 1,

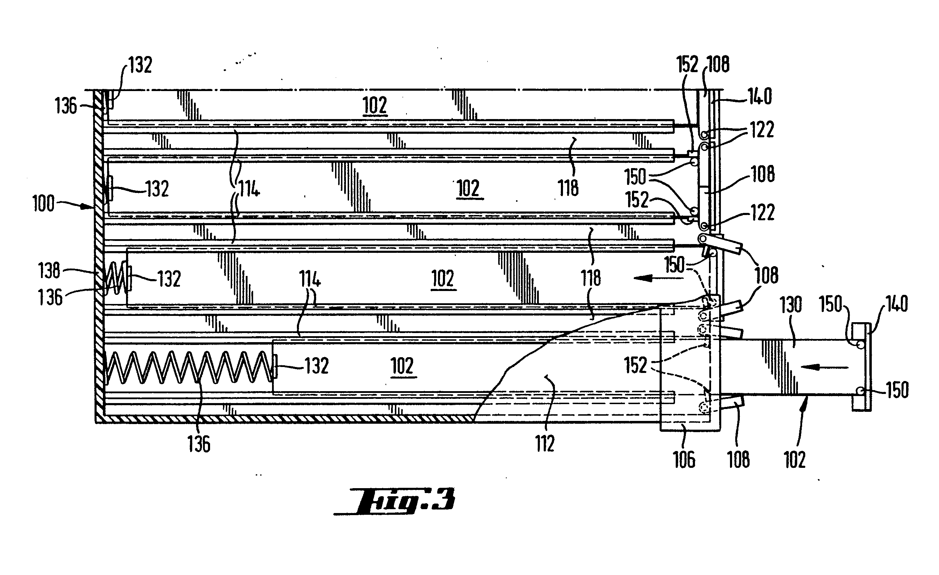

Fig. 5 ist eine Teilfrontansicht ähnlich Fig. 2,

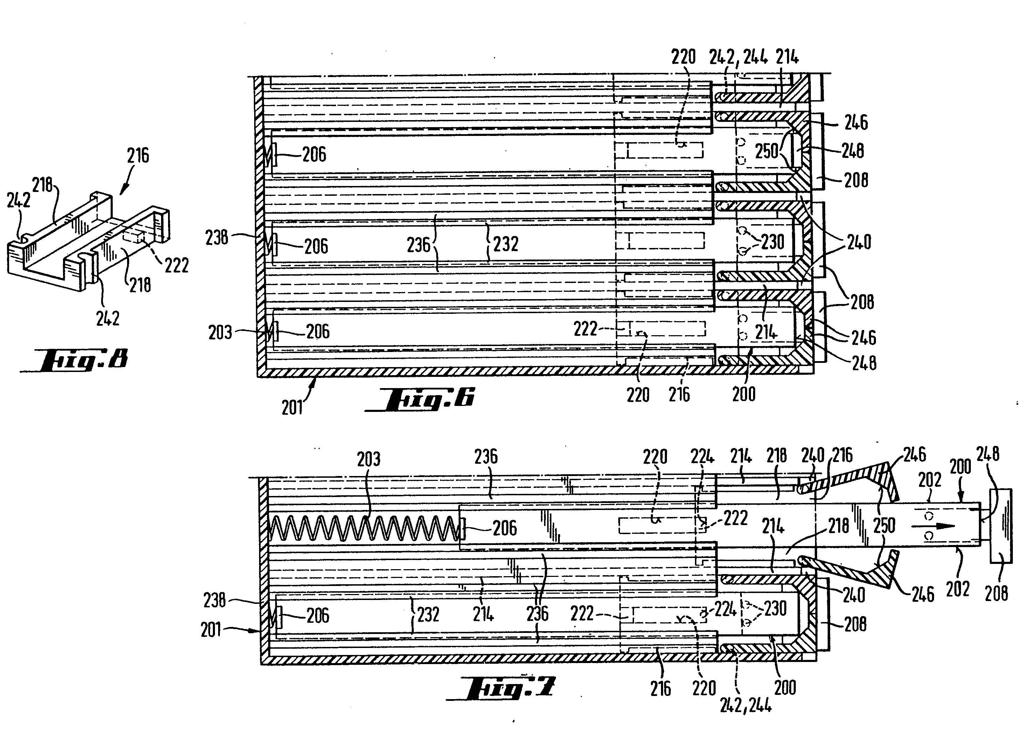

Fig. 6 ist ein Teilquerschnitt bei geschlossenem Gehäuse,

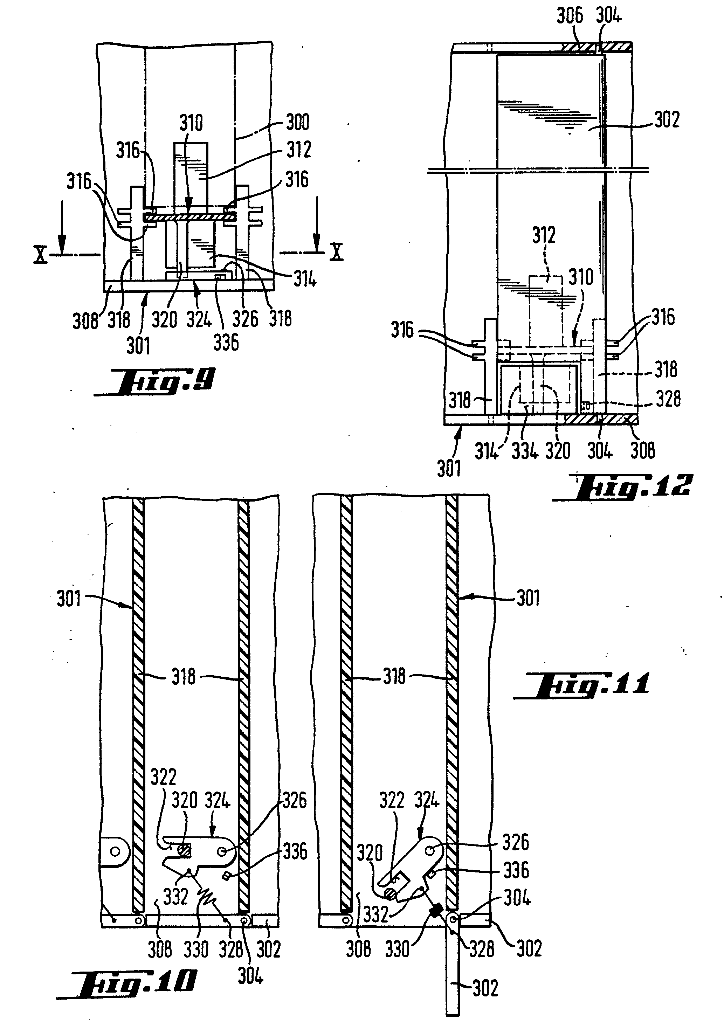

Fig. 7 ist ein entsprechender Teilquerschnitt bei ausgefahrenem Schieber, und

Fig. 8 zeigt perspektivisch ein Bauteil.

Die Fig. 9 bis 12 zeigen ein drittes Ausfürungsbeispiel:

Fig. 9 ist eine Teilfrontansicht ähnlich Fig. 2,

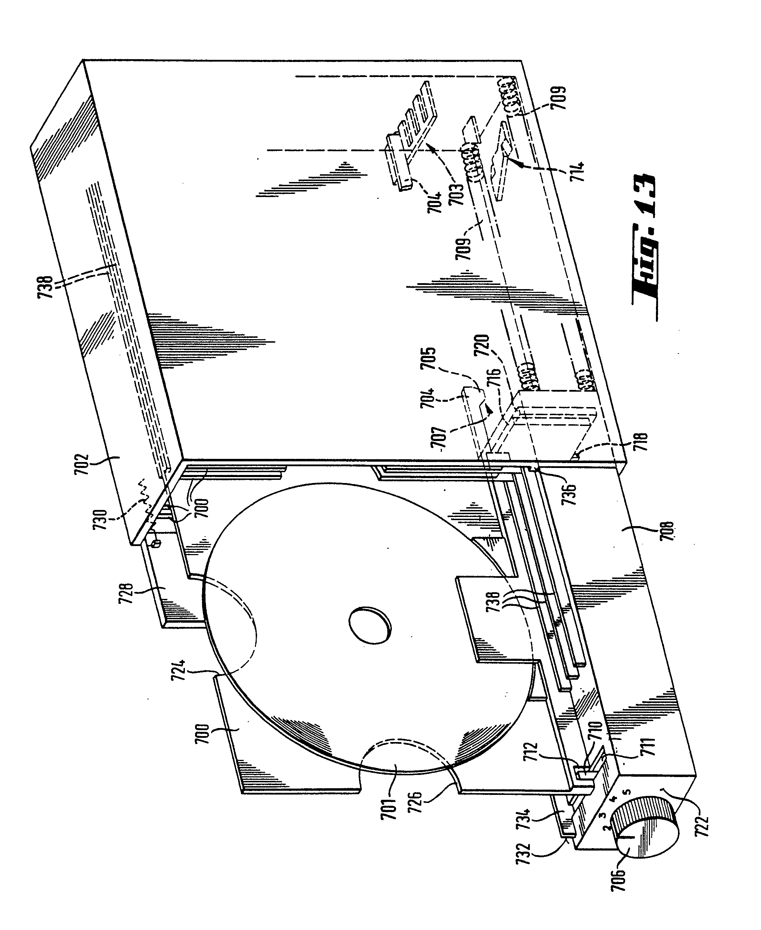

Fig. 10 bzw. 11 zeigen im Horizontal-Teilschnitt einen geschlossenen bzw. einen offenen Behälter, und

Fig. 12 stellt in Teilfrontansicht einen geschlossenen Behälter dar.

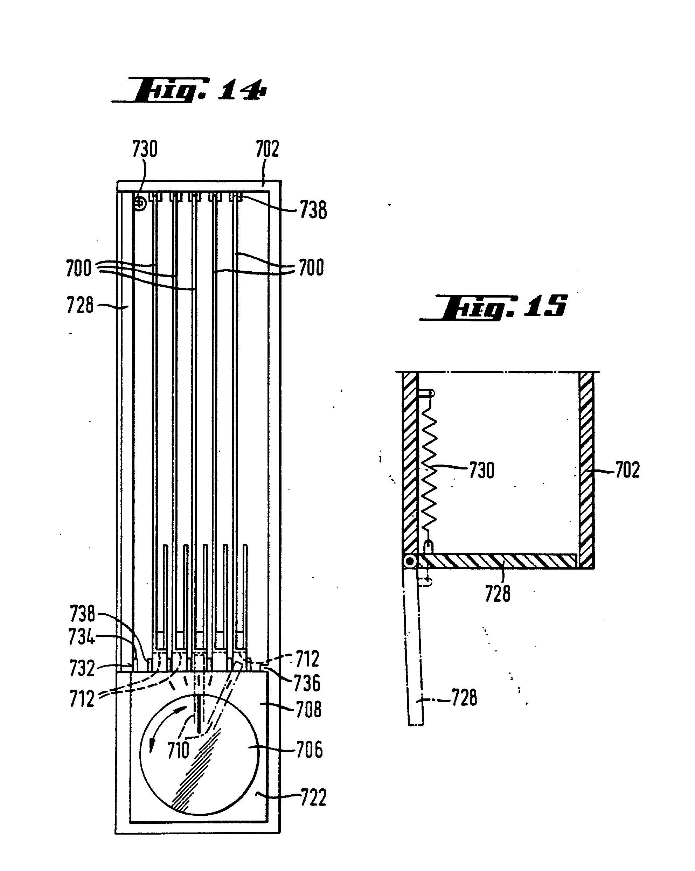

Die Fig. 13 bis 15 schließlich zeigen ein viertes Ausführungsbeispiel.

Fig. 13 stellt den geöffneten Behälter perspektivisch dar,

Fig. 14 ist eine Frontansicht des offenen Behälters, und

Fig. 15 ist eine Detail-Schnittdarstellung des Gehäusefrontbereichs.

Das im wesentlichen kastenförmige Gehäuse 100 nimmt eine bestimmte Anzahl von Transportschiebern 102 für jeweils z.B. eine Videokassette 104 auf. Frontseitig ist das Gehäuse von einem Rahmen 106 umschlossen, und jedem einzelnen Aufnahmefach ist ein Paar von Türelementen 108 zugeordnet.

An das Gehäuse 100 sind Stege 110 im Bereich der Gehäusedeckwand 112 angeformt, die die Aufnahmefächer der einzelnen Kassetten 104 gegeneinander abgrenzen. Entsprechende Stege 114 sind auch von der Bodenwandung 116 des Gehäuses 100 her hochstehend vorgesehen. Die unteren SStege 114 reichen nicht bis zur frontseitigen Öffnung des Gehäuses, so daß die aufwärts gerichtete Fläche jeweils eines Querstegs 118 freiliegt. In ihr sind Bohrungen eingebracht, die als Lager für untere Drehzapfen 120 der Türelemente dienen. Am oberen Ende weisen die Türelemente entsprechende Drehzapfen 122 auf, die in ausgefluchtet angeordnete U-Ausnehmungen 124 der Frontkante der Deckwand 112 eingesenkt sind und von dem, nach Einsetzen der Türelemente aufgeschobenen Rahmen 106 abgedeckt werden.

Die Stege 110, 114 und 118 erstrecken sich senkrecht zur offenen Frontseite des Gehäuses, und dasselbe gilt für Supportstege 126, die zwischen den Querstegen 118 und der Bodenwandung 116 des Gehäuses 100 angeformt sind. Die Stege 114 ragen seitlich über die Querstege 118 hinaus und begrenzen so paarweise jeweils einen Führungskanal für den dem betreffenden Aufnahmefach zugeordneten Schieber.

Das Gehäuse, der Rahmen und die Türelemente sind jeweils Kunststoffspritzteile. Auch der nun zu beschreibende Schieber ist ein Kunststoffspritzteil.

Er umfaßt eine Bodenplatte 130, die parallel zu der Bodenwandung des Gehäuses 100 verläuft und an die sich senkrecht dazu parallel zu der offenen Gehäusefront ein Transportarm 132 und ein Druckarm 134 nach oben bzw. nach unten anschließen. Der Transportarm 132 befindet sich am hinteren Schieberende, und er schiebt die Kassette 104 nach außen. Hierzu dient eine Schraubendruckfeder 136, die sich einerseits an der Gehäuserückwand 138, andererseits an dem Druckarm 134 abstützt. Am frontseitigen Ende der Bodenplatte 130 befindet sich eine Taste 140, die nach unten federnd auslenkbar ist und dabei einen Riegel 142 aus einer, als Durchbruch durch den Steg 118 ausgebildeten Falle heraushebt, womit der Schieber für den Ausschub durch die Feder 136 freigegeben wird. Der auslenkbare Bereich der Bodenplatte 130 endet an einer Stützplatte 144, die sich von der Bodenplatte 130 senkrecht nach unten erstreckt. Die Stützplatte ist außermittig vorgesehen, da neben ihr noch eine Rückstellfeder 146 Platz benötigt. Ein an den Gehäuseboden angeformter Zapfen 148 begrenzt den Ausschubweg, da auf ihn der Druckarm 134 aufläuft.

Auf der Oberseite der Bodenplatte, unmittelbar hinter den Türelementen im geschlossenen Zustand des Behälters, sind Steuerstifte 150 angeformt, die beim Schieberausschub ein Drehmoment auf die Türelemente ausüben (Fig. 3, oben). Der Ausschubweg des Schiebers ist groß genug, daß die Kassette bis weit vor die Türelemente aus dem Gehäuse heraustransportiert wird und bequem erfaßt werden kann (Fig. 3, unten). Beim Wiedereinschub des Schiebers (Fig. 3, Mitte) laufen die Steuerstifte 150 auf Anschlaglappen 152 der Türelemente auf und über nun ein Drehmoment in Schließrichtung aus, wobei der Schieber mittels der Taste geschoben wird. Beim Loslassen der Taste verriegelt sich der Schieber wieder im Gehäuse.

Es sei noch erwähnt, daß in Fig. 2 im linken Teil der Rahmen 106 weggebrochen dargestellt ist und im rechten Teil die Türelemente und die Taste entfernt sind, um den Aufbau des Schiebers erkennbar zu machen.

Die Ausführungsform nach Figuren 4 bis 8 unterscheidet sich von der ersten Ausführungsform nach Figuren 1 bis 3 durch die Ausbildung und Anordnung der Türelemente und des Schiebers, während das Gehäuse 201 im wesentlichen - soweit hier nichts anderes erläutert wird - dem ersten Ausführungsbeispiel entspricht.

Der Schieber umfaßt wieder eine Bodenplatte 200, von der beidseits Stützplatten 202 nach unten ragen. Auf den Druckarm 204 wirkt wieder eine Druckschraubenfeder 203, und der Transportarm 206 schiebt den Datenträger - auch hier ist eine Videokassette angenommen - nach außen, wenn der Schieber entriegelt wird. Hierzu dient eine anhebbare Entriegelungstaste 208, angeformt an die Schieberbodenplatte und federnd auslenkbar, wobei der Riegel 210 aus der im Gehäuseboden ausgenommenen Falle 212 gehoben wird.

Vom Gehäuseboden ragen Vertikalstege 214 nach oben. Zwischen ihnen ist ein Schlitten 216 - perspektivisch in Fig. 8 dargestellt - geführt, der U-Querschnitt besitzt und zwischen dessen Schenkeln 218 der Schieber geführt ist. Schieber 200 und Schlitten 216 sind teleskopartig relativbeweglich: Der Bewegungshub des Schlittens wird durch Auflaufen seines in einem Bodenschlitz 220 des Gehäuses laufenden Anschlags 222 auf die Schlitzkante 224 begrenzt, und der Schieber 200 läuft seinerseits mit an die Stützplatten 202 angeformten Anschlägen 226 auf die Endkante 228 des Schlittens auf. An die Unterseite der Taste angeformte Rückstellnocken 230 schieben beim Rückhub des Schiebers den Schlitten zurück in die Ausgangsposition, die in Fig. 6 dargestellt ist.

Die den Schieber 200 übergreifenden Gehäusequerstege 232 und die die Kassette 234 stützenden Haltestege 236 reichen von der Gehäuserückwand 238 nur soweit nach vorn, daß in der Einschubposition (Fig. 4 und 6) die vordere Partie des Schiebers und des Schlittens nur noch seitlich von den Vertikalstegen 214 abgestützt sind, wobei an deren Frontkanten je eine Stufe 240 ausgenommen ist. Der Schlitten 216 besitzt auswärts gewandte Lagerschalen 242, die in der Ausschubposition des Schlittens neben den erwähnten Stufen 240 stehen. In diesen Lagerschalen sitzen die Lagerzapfen 244 je eines Türelements 246 mit winkelförmigem Querschnitt.

In der Aufbewahrungsposition werden die Türelemente von den Vertikalstegen 214 geschlossen gehalten. Bei Lösen der Verriegelung läuft der Schieber 200 mit seiner Frontkante 248 auf die inneren Schrägflächen 250 der Türelemente 246 auf und übt dabei sowohl eine Zugkraft auf diese und damit auf den Schlitten als auch ein Drehmoment auf die Türelemente aus. Zunächst werden die Zugkräfte wirksam, da die Türelemente nicht ausweichen können, so daß der Schlitten 216 mitgenommen wird. Erst wenn sein Anschlag 222 bei 224 aufläuft, und gleichzeitig auch die Stufen 240 ein Verschwenken der Türelemente zuläßt, wird auch das Drehmoment wirksam, und die Türelemente öffnen, wie in Fig. 7 dargestellt. Beim Schließen läuft der Vorgang umgekehrt ab, wobei die Rückstellnocken 230 die Kraft auf den Schlitten 216 übertragen. Schlitten 216 und Türelement 246 bilden so eine gemeinsame, als "Türanordnung" zu verstehende Baugruppe.

Bei der Ausführungsform nach Figuren 9 bis 12 ist pro Aufnahmefach des Behälters - wobei auch hier eine Videokassette 300 als Beispiel gezeichnet ist - nur ein Türelement 302 vorgesehen, das mit Lagerzapfen 304 in der Gehäusedeckwand 306 bzw. Gehäusebodenwandung 308 um eine Vertikalachse schwenkbar gelagert ist. Der Schieber weist wieder eine Bodenplatte 310, einen Transportarm 312 und einen Druckarm 314 mit entsprechenden Funktionen wie in den ersten Ausführungsbeispielen auf. Die Bodenplatte 310 ist zwischen Schienen 316 an Vertikalstegen 318 des Gehäuses 301 geführt.

Von der Bodenplatte des Schiebers ragt ein Steuerstift 320 nach unten in einen Steuerschlitz 322 eines Hebels 324, der um einen Lagerzapfen 326, angeformt an die Gehäusebodenwandung, schwenkbar ist. An einem auf der Innenseite des Türelements angebrachten Stift 328 ist eine Schraubenzugfeder 330 eingehangen und mit ihrem anderen Ende bei 332 an dem Hebel 324 befestigt.

In der Schließstellung (Fig. 10) hat der Steuerstift 320 den Hebel 324 im Uhrzeigersinn verschwenkt, wobei die Feder 330 ein Drehmoment auf das Türelement 302 übertragen hat, so daß dieses zugeklappt ist. Bei Freigabe des Schiebers durch Betätigen der Taste 334 (Fig. 12) drückt zunächst der Schieber gegen das Türelement und öffnet dabei den Behälter; der Steuerstift 320 verschwenkt aber auch im Gegenuhrzeigersinn den Hebel 324, so daß die Vorspannung der Feder 330 abgebaut wird und sie schließlich wie ein Gestänge wirkt, das das Türelement vollends öffnet. Diese Lage des Hebels 324 wird durch einen Anschlag 336 definiert. Beim Einschub des Schiebers läuft der Vorgang in umgekehrter Reihenfolge ab. - Es versteht sich, daß die Verwendung der Feder weniger Toleranzprobleme mit sich bringt, als wenn man ein starres Übertragungsgestänge verwenden würde, was natürlich im Prinzip auch möglich ist.

Eine vierte Ausführungsform ist in den Fig. 13 bis 15 dargestellt. Dieser Behälter ist für die Aufbewahrung von Digitalaufzeichnungsplatten , also etwa den sogenannten Compactdiscs oder Bildplatten, konzipiert. Bei einem solchen Behälter besteht die Forderung, daß einerseits die Platten möglichst dicht gestapelt untergebracht sein sollen, um Platz zu sparen, andererseits jede einzelne Platte bequem auffindbar und herausnehmbar sein soll. Diese Forderungen erfüllt der Behälter nach Fig. 13 bis 15 dadurch, daß jede einzelne Platte 701 in einem Halter 700 aufgenommen ist, von denen in einem gemeinsamen Gehäuse 702 mehrere nebeneinander vorgesehen sind. Allen Haltern ist ein Schieber 708 gemeinsam zugeordnet, der jedoch einen Wählmechanismus - hier in Form eines drehbaren Wählknopfes 706 - aufweist, welcher dafür sorgt, daß beim Ausschub des Schiebers immer nur einer der Halter mitgenommen wird, die übrigen jedoch im Gehäuse bleiben.

Alle Halter 700 sind gleitbeueglich z.B. mittels oberer und unterer Schienen 738 am Gehäuse bzw. Schieber geführt. An der der Gehäuseöffnung gegenüberliegenden Innenseite der Gehäuserückwand ist eine kammartig ausgebildete Rasteinrichtung 703 angeformt, in deren Rastöffnungen die Rastnasen 705 von nach oben ausfedernd ausgebildeten Rastarmen 704 der Halter einrasten können. Die Federcharakteristik der Arme 704 und die Rastschräge 707 der Nasen 705 sind so bemessen, daß die Halter beim Ausschub des Schiebers aus dem Gehäuse in diesem zurückgehalten werden mit Ausnahme des einen mittels Wählknopf 706 bestimmten Halters, der formschlüssig mit dem Schieber gekoppelt wird und deshalb beim Schiebergusschub mitgenommen wird; die Ausschubfederanordnung 709 ist so bemessen, daß die Rastkräfte überwunden werden.

Der Wählknopf 706 ist in der Stirnwand 722 des Schiebers drehbar gelagert und in ebensovielen Positionen einrastbar wie Halter 700 vorhanden sind. Im Innern des Schiebers trägt die Wählknopfachse einen radialen Kupplungsarm 710, der sich durch einen Schlitz 711 in der Oberseite des Schiebers erstreckt und dort in einen Kupplungseinschnitt 712 eines Halters eingreift, je nach der Winkelstellung des Wählknopfes, wodurch der ausgewählte Halter mit dem Schieber gekuppelt und beim Schieberausschub mitgenommen wird. Die Platte kann dann dem Halter nach oben oder nach vorn entnommen werden, wofür dieser Fingereingriffsausschnitte 724 bzw. 726 aufweist.

Im eingeschobenen Zustand wird der Schieber gegen die Vorspannung der Federanordnung 709 im Gehäuse verriegelt gehalten. Hierfür ist an der Rückseite des Schiebers ein Führungskäfig 720 vorgesehen, der einen verschiebbaren und schwenkbaren Riegel 716 enthält. Der Steuer- und Verriegelungsfortsatz 718 des Riegels 716 wird beim Einschub des Schiebers von einer an den Gehäuseboden angeformten Kulisse 714 in eine Verriegelungsposition gesteuert und bei kurzem Druck auf den Knopf 706 wieder entriegelt. Der Schieber ist dabei am Gehäuseboden sowie mittels einer einspringenden Leiste 736 geführt. Auf der der Leiste gegenüberliegenden Seite des Gehäuses ist schwenkbar ein Türelement 728 angelenkt, das von einer Zugfeder 730 in seine Schließposition mit ausgezogenen Linien in Fig. 15 dargestellt - vorgespannt ist. Der Schieber trägt auf seiner Oberseite eine Leiste 734, deren nach innen zurückgesetzte Endkante 732 bei Lösen der Schieberverriegelung das Türelement aufstößt, das durch Anliegen an der Außenseite der Leiste 734 offengehalten wird.

## Patentansprüche

1) Behälter zur Aufnahme von Datenträgern (104, 234, 300, 701) in Form von Magnetbandkassetten oder Platten mit einem an einer Schmalseite offenen Gehäuse (100, 201, 301) zur Aufnahme mindestens eines Datenträger-Transportschiebers (102, 200, 310, 708), mit einer zwischen Gehäuse und Schieber wirkenden Federanordnung (136, 203, 709) zum Ausschieben des Schiebers, der dabei einen eingelegten Datenträger durch die Gehäuseöffnung in eine Position transportiert, in der dieser erfaßbar ist, mit einem schwenkbeweglich an das Gehäuse angelenkten Türelement (108, 246, 302, 728) zum Verschließen des für die Datenträger bestimmten Raums, und mit einer durch ein Betätigungsorgan (140, 208, 334, 706) manuell entriegelbaren Verriegelungsanordnung (142, 210, 718) zum Arretieren des eingelegten Datenträgers gegen die Federvorspannung und zum Verschlossenhalten des Türelements, dadurch gekennzeichnet, daß der Schieber ein bis in die Gehäuseöffnung ragendes Element (130, 202, 708) aufweist, an dessen frontseitig freiliegendem, vom Türelement nicht überdeckten Teil das Betätigungsorgan vorgesehen ist, und daß das Türelement von der Schieberbewegung gesteuert in seine Öffnungs- und Schließlage zwangsgeführt ist.

2) Behälter nach Anspruch 1, dadurch gekennzeichnet, daß das Gehäuse mehrere Transportschieber (102, 200, 310) mit jeweils einzeln zugeordneten Türelementen aufweist (Fig. 1-3, 4-8, 9-12).

3) Behälter nach Anspruch 1 oder 2, dadurch gekennzeichnet, daß jedem Transportschieber (102, 200) ein Paar von gegensinnig schwenkbaren Türelementen (108, 246) zugeordnet ist (Fig. 1-3, 4-8).

4) Behälter nach einem der Ansprüche 1 bis 3, dadurch gekennzeichnet, daß der Schieber (102) Mitnehmer (150) für jedes ihm zugeordnete Türelement (108) aufweist, die nur zu Beginn des Ausschiebehubes des Schiebers und zum Ende des Einschiebehubes des Schiebers in Wirkverbindung mit den Türelementen stehen (Fig. 1-3).

5) Behälter nach einem der Ansprüche 1 bis 3, dadurch gekennzeichnet, daß der Schieber (200, 310) über ein Koppelorgan (216, 324) mit jedem ihm zugeordneten Türelement (246, 302) in Wirkverbindung steht (Fig. 4-8, 9-12).

6) Behälter nach Anspruch 5, dadurch gekennzeichnet, daß das Koppelorgan für die Übertragung eines Teilhubes des Schiebers zu Beginn des Ausschubs und zum Ende des Einschubs auf die Türelemente ausgebildet ist.

7) Behälter nach Anspruch 5 oder 6, dadurch gekennzeichnet, daß das Koppelorgan ein parallel zum Schieber verschieblicher Schlitten (216) ist (Fig. 4-8).

8) Behälter nach Anspruch 7, dadurch gekennzeichnet, daß die Türelemente in dem Schlitten (216) gelagert sind.

9) Behälter nach Anspruch 5 oder 6, dadurch gekennzeichnet, daß das Koppelorgan ein Übertragungshebel (324) ist (Fig. 9-12).

10) Behälter nach Anspruch 9, dadurch gekennzeichnet, daß der Übertragungshebel elastisch mit dem Türelement gekoppelt ist.

11) Behälter nach Anspruch 1, dadurch gekennzeichnet, daß der Schieber (708) eine Steuerleiste (734) aufweist, mittels der das Türelement (728) gegen die Kraft einer es in eine Schließposition vorspannenden Feder (730) aufdrückbar und in Öffnungsposition abstützbar ist (Fig. 13-15).

## Claims

1. Container for accommodating data storage media (104, 234, 300, 701) in the form of magnetic tape cassettes or discs, having a housing (100, 201, 301) that is open at one narrow face for accommodating at least one data storage medium-transporter slider member (102, 200, 310, 708), having a spring arrangement (136, 203, 709), acting between the housing and the slider member, for ejecting the slider member, which on ejection transports an inserted data storage medium through the opening in the housing into a position in which it can be grasped, having a door element (108, 246, 302, 728) for closing the space intended for the data storage media, which door element (108, 246, 302, 728) is pivotally-mounted on the housing, and having a locking arrangement (142, 210, 718) for securing the inserted data storage medium against the bias of the spring and for keeping the door element closed, which locking arrangement (142, 210, 718) can be unlocked manually by means of an operating member (140, 208, 334, 706), characterised in that the slider member has an element (130, 202, 708) that extends into the opening in the housing and is provided with the operating member on its portion that is exposed at the front face and that is not covered by the door element, and the door element is positively guided into its open and closed position under the control of the movement of the slider member.

2. Container according to claim 1, characterised in that the housing has several transporter slider members (102, 200, 310) each having individually associated door elements (Figs 1-3, 4-8, 9-12).

3. Container according to claim 1 or 2, characterised in that each transporter slider member (102, 200) is associated with a pair of door elements (108, 246) that can be pivoted in opposite directions (Figs 1-3, 4-8).

4. Container according to any one of claims 1 to 3, characterised in that the slider member (102) has actuator members (150) for each door element (108) associated therewith, which actuator members are in operative connection with the door elements only at the beginning of the outward travel of the slider member and at the end of the inward travel of the slider member (Figs 1-3).

5. Container according to any one of claims 1 to 3, characterised in that the slider member (200, 310) is in operative connection with each door element (246, 302) associated therewith by way of a coupling element (216, 324) (Figs 4-8, 9-12).

6. Container according to claim 5, characterised in that the coupling element is arranged to transfer a part of the stroke of the slider member to the door elements at the beginning of ejection and at the end of insertion.

7. Container according to claim 5 or 6, characterised in that the coupling element is a carriage (216) that can be displaced parallel to the slider member (Figs 4-8).

8. Container according to claim 7, characterised in that the door elements are mounted in the carriage (216).

9. Container according to claim 5 or 6, characterised in that the coupling element is a transfer lever (324) (Figs 9-12).

10. Container according to claim 9, characterised in that the transfer lever is coupled resiliently with the door element.

11. Container according to claim 1, characterised in that the slider member (708) has a control bar (734) by means of which the door element (728) can be pushed open against the force of a spring (730) biasing it towards a closed position and can be supported in an open position (Figs 13-15).

**Revendications**

1. Logement destiné à recevoir des supports de données (104, 234, 300, 701) sous la forme de cassettes à bande magnétique ou de disques, et comportant un boîtier (100, 201, 301) ouvert sur un petit côté et servant à loger au moins un poussoir (102, 200, 310, 708) de déplacement des supports de données, un dispositif à ressort (136, 203, 709) agissant entre le boîtier et le poussoir de manière à repousser le poussoir qui entraîne un support de données inséré à travers l'ouverture du boîtier dans une position dans laquelle ce support de données peut être saisi, un élément de porte (108, 246, 302, 728) articulé de manière à pouvoir pivoter sur le boîtier et servant à fermer l'espace destiné à loger le support de données, et un dispositif de verrouillage (142, 210, 718), pouvant être déverrouillé manuellement au moyen d'un organe d'actionnement (140, 208, 334, 706) et servant à bloquer le support de données inséré, à l'encontre de la précontrainte du ressort et à maintenir fermé l'élément de porte, caractérisé en ce que le poussoir comporte un élément (130, 202, 708) pénétrant dans l'ouverture du boîtier et dans la partie duquel, qui est libre sur la face avant et n'est pas recouverte par l'élément de porte, se trouve prévu l'organe d'actionnement, et que l'élément de porte est amené de force, sous la commande du déplacement du poussoir, dans sa position ouverte et dans sa position fermée.

2. Logement selon la revendication 1, caractérisé en ce que le boîtier comporte plusieurs poussoirs d'entraînement (102, 200, 310) comportant des éléments de porte, qui sont respectivement individuellement associés (figures 1-3, 4-8, 9-12).

3. Logement selon la revendication 1 ou 2, caractérisé en ce qu'à chaque poussoir d'entraînement (102, 200) est associé un couple d'éléments de porte (108, 246) pouvant pivoter en des sens opposés (figures 1-3, 4-8).

4. Logement selon l'une quelconque des revendications 1 à 3, caractérisé en ce que le poussoir (102) comporte des organes d'entraînement (150) qui sont prévus pour chaque élément de porte (108), qui est associé à ce poussoir, et qui sont reliés, selon une liaison active, aux éléments de porte uniquement au début de la course de sortie du poussoir et à la fin de la course d'introduction du poussoir (figures 1-3).

5. Logement selon l'une des revendications 1 à 3, caractérisé en ce que le poussoir (200, 310) est relié selon une liaison active par l'intermédiaire d'un organe de couplage (216, 324) à chaque élément de porte (246, 302) qui lui est associé (figures 4-8, 9-12).

6. Récipient selon la revendication 5, caractérisé en ce que l'organe de couplage est agencé de manière à transmettre une partie de la course du poussoir au début de la sortie et à la fin de l'introduction aux éléments de porte.

7. Logement selon la revendication 5 ou 6, caractérisé en ce que l'organe de couplage est un chariot (216) déplaçable parallèlement au poussoir (figures 4-8).

8. Logement selon la revendication 7, caractérisé en ce que les éléments de porte sont montés dans le chariot (216).

9. Récipient selon la revendication 5 ou 6, caractérisé en ce que l'organe de couplage est un levier de transmission (324) (figures 9-12).

10. Logement selon la revendication 9, caractérisé en ce que le levier de transmission est accouplé élastiquement à l'élément de porte.

11. Logement selon la revendication 1, caractérisé en ce que le poussoir (708) comporte une barrette de commande (734), à l'aide de laquelle l'élément de porte (728) peut être repoussé à l'encontre de la force d'un ressort (730) appliquant sous précontrainte l'élément de porte dans une position fermée, et peut être soutenu dans la position ouverte (figures 13-15).

Fig.1

Fig.2

Fig.3

**Fig. 5**

**Fig. 4**

119 320

Fig.8

Fig.6

Fig.7

119 320

Fig.9

Fig.12

Fig.11

Fig.10

Fig. 13

738
702
730
728
724
700
700
732 734
712
701
726
710
711
706
722
707 704 705
716 720
738
736
704
703
709
714
709
718
708

119 320

**Fig. 14·**

730    702

738

700    700

728

738
734
732
712

712
736
708
710    706

722

**Fig. 15**

730    702

728

728